## Europäisches Patentamt

## European Patent Office

## Office européen des brevets

(19)

(11) Veröffentlichungsnummer: **0 030 755 B1**

(12) **EUROPÄISCHE PATENTSCHRIFT**

(45) Veröffentlichungstag der Patentschrift:
15.02.84

(51) Int. Cl.³: **B 65 B 61/14**, A 22 C 11/12

(21) Anmeldenummer: **80201138.7**

(22) Anmeldetag: **02.12.80**

(54) **Vorrichtung zur Übergabe von Wurstaufhängeschlaufen in eine Verschliessmaschine.**

(30) Priorität: **15.12.79 DE 2950603**

(43) Veröffentlichungstag der Anmeldung:
**24.06.81 Patentblatt 81/25**

(45) Bekanntmachung des Hinweises auf die Patenterteilung:
**15.02.84 Patentblatt 84/7**

(84) Benannte Vertragsstaaten:
**AT BE CH DE FR GB IT LI NL SE**

(56) Entgegenhaltungen:
**DE - A - 2 656 581**
**DE - A - 2 745 387**
**DE - A - 2 803 511**
**DE - B - 1 632 109**
**DE - B - 1 803 353**
**DE - B - 2 414 466**
**DE - B - 2 529 821**
**DE - B - 2 700 641**
**DE - B - 2 730 121**

(73) Patentinhaber: **Niedecker, Herbert, Dipl.-Ing., Am Ellerhang 6, D-6240 Königstein 2 (DE)**

(72) Erfinder: **Niedecker, Herbert, Dipl.-Ing., Am Ellerhang 6, D-6240 Königstein 2 (DE)**

(74) Vertreter: **Fischer, Ernst, Dr., Reuterweg 14, D-6000 Frankfurt am Main 1 (DE)**

## Vorrichtung zur Übergabe von Wurstaufhängeschlaufen in eine Verschliessmaschine

Die Erfindung bezieht sich auf eine Vorrichtung zur Zuführung und Übergabe von Wurstaufhängeschlaufen in die aus zwei gegenüberliegenden Führungskanälen gebildete Führungsbahn von vereinzelt der Verschlussstelle einer Verschliessmaschine zugeführten Verschlussklammern.

Es ist bekannt, vorgefertigte Aufhängeschlaufen von Hand in die Verschliesseinrichtung oder Verschlussklammer einzulegen. Um die Nachteile des manuellen Einlegens von Schlaufen zu vermeiden, wurden Vorrichtungen zum automatischen Zuführen von Aufhängeschlaufen geschaffen (DE-B2-2529821). Diese Vorrichtung wurde für Verschliessautomaten entwickelt und ist nicht geeignet für Verschliessmaschinen, für welche die Verschlussklammern vereinzelt derVerschlussstelle zugeführt werden.

Ferner ist ein Verfahren und eine Vorrichtung zum Anbringen einer Aufhängeschlaufe an einen schlauchartigen Verpackungshüllenabschnitt bekannt, bei welchem die Schlaufe unmittelbar erst an der Verschliessvorrichtung erzeugt wird (DE-B2-2 700 641). Auch diese Vorrichtung ist für die hier in Rede stehenden Verschliessmaschinen wegen des grossen Aufwandes und der benötigten Platzverhältnisse an der Verschlussstelle nicht geeignet.

Weiter ist eine Vorrichtung zum Vorlegen einer Aushängeschlaufe zur Verwendung an einer Maschine zum Verschliessen von Wursthüllen bekannt, die in der DE-A1-2 803 511 beschrieben ist. Dort wird der an den Enden zusammengenähte doppelte Bindfaden in die geöffnete Verschlussklappe einer Verschliessmaschine geschoben und mit der Verschlussklammer an den zu verschliessenden Zopf angelegt. Die Schlaufe wird also hier nicht vom Klammerschenkel erfasst und kann bei grösserer Belastung herausrutschen. Schliesslich ist es bekannt (DE-B2-2 414 466), formstabile vorgefertigte Kunststoffschlaufen zum Aufhängen der Wurstwaren mit einer automatisch oder von Hand zu betätigenden Zuführeinrichtung für einzelne Kunststoffschlaufen an das Ende einer Wursthülle so anzulegen, dass der Stiel der Kunststoffschlaufe von der Verschlussklammer für die Wursthülle beim Verschliessen an dieser festgemacht wird. Wurstaufhängeschlaufen aus flexiblem Material, also aus einer Aufhängeschnur, können mit dieser Vorrichtung nicht der Verschlussstelle zugeführt werden. Auch kann mit dieser Vorrichtung die Wurstaufhängeschlaufe nicht so zugeführt werden, dass die Verschlussklammer nur eine Seite der geöffneten Schlaufe erfasst, was für die bessere Befestigung der Schlaufe am Ende der Wursthülle wünschenswert ist.

Es besteht daher die Aufgabe, eine Vorrichtung zu schaffen, die bei Verschliessmaschinen, bei denen die Verschlussklammern vereinzelt der Verschlussstelle zugeführt werden, Wurstaufhängeschlaufen aus flexiblem Material, also aus einer Aufhängeschnur, in einer Weise zuführt, die einerseits den heutigen Anforderungen im Hinblick auf die Automatisierung entspricht, und die andererseits aber dieses Ziel auf möglichst einfache Weise erreicht, wobei noch durch das Erfassen der Schlaufe mit dem Schenkel deren Herausrutschen aus der Verschlussklammer vermieden wird.

Diese Aufgabe wird dadurch gelöst, dass bei einer Vorrichtung der eingangs beschriebenen Art (DE-B2-2 414 466) mit einem Mitnehmer für die Schlaufe dessen Endteil in der Übergabestellung durch einen Durchbruch mindestens eines Führungskanals für einen Schenkel der Verschlussklammer in die Führungsbahn hineinragt, erfindungsgemäss zur Zuführung einer Schlaufe aus flexiblem Material in den Führungskanal und zur Erfassung nur einer Seite der geöffneten Schlaufe durch einen Schenkel der Verschlussklammer das Endteil des Mitnehmers eine Aufnahme enthält, die die eine Seite der geöffneten Schlaufe mitnimmt, wobei das Endteil des Mitnehmers so ausgebildet ist, dass es die Führungsbahn im Bereich der Übergabe der Schlaufe freilässt, und dass die Aufnahme so positioniert wird, dass die eine Seite der Schlaufe sich im Bereich der Führungsbahn befindet.

Das Endteil des Mitnehmers kann in der Übergabestellung einen Abschnitt des Führungskanals für mindestens einen Schenkel der Verschlussklammer bilden. Das Endteil des Mitnehmers kann auch gabelförmig ausgebildet sein und in der Übergabestellung in die Führungsbahn der Verschlussklammer hineinragen, wobei der Grund des gabelförmigen Endes einen Abschnitt des Führungskanals eines Schenkels der Verschlussklammer bildet.

Ein gebogener und schwenkbarer oder ein gerader und schiebbarer Mitnehmer erfasst mit seiner Aufnahme eine vorgefertigte Aufhängeschlaufe und führt sie in den Verschlussklammer-Führungskanal möglichst weit von der Verschlussstelle entfernt so, dass dann der Klammerschenkel der U-förmigen Verschlussklammer eine Seite der geöffneten Aufhängeschlaufe erfasst und zur Verschlussstelle mitnimmt. Durch diese Aufnahme des Mitnehmers wird der Faden sicher erfasst; der Mitnehmer wird bis zu einem Endanschlag geführt und der an dieser Stelle unterbrochene Führungskanal im Mitnehmer ergänzend gebildet.

Bei einer anderen zweckmässigen Ausführungsform ist der Mitnehmer um 90° gedreht zur Klammerführungsebene angebracht; er führt die Schlaufe also senkrecht zu der Verschliessplatte ein, wobei auch hier der Mitnehmer eingeschwenkt oder gradlinig unter einem Winkel geführt ist.

Anhand der Fig. 1 bis 7c werden Ausführungsformen der erfindungsgemässen Vorrichtung näher erläutert:

Fig. 1 zeigt eine Ansicht eines Teiles eines Verschliesskopfes mit Mitnehmer und Aufnahme für die Schlaufe:

Fig. 2 zeigt eine Ansicht einer Verschliessmaschine mit einem Schnitt durch eine gerade Mitnehmerführung mit Aufnahme;

Fig. 3 zeigt eine perspektivische Darstellung des Durchbruchs des Führungskanals einer Verschliessmaschine mit Endteil des gabelförmigen Mitnehmers mit Aufnahme für die Schlaufe;

Fig. 4 zeigt einen Ausschnitt der Übergabestelle mit Mitnehmerende und Aufnahme für die Schlaufe sowie Verschlussstempel in Verschliessstellung;

Fig. 5 zeigt einen Schnitt durch Mitnehmerende mit Aufnahme für die Schlaufe, Führungskanal und Verschlussklammer;

Fig. 6 zeigt eine Draufsicht auf das Mitnehmerende eines geraden Mitnehmers mit geschlossener Clipführung;

Fig. 7a zeigt einen Längsschnitt durch einen Führungskanal mit einer Ansicht des Mitnehmers in Übergabestellung mit um 90° gedrehten Durchbruch;

Fig. 7b zeigt einen Ausschnitt eines Führungskanals mit diesem Druchbruch für das Mitnehmerende;

Fig. 7c zeigt einen Schnitt durch den Führungskanal mit Draufsicht auf das Mitnehmerende.

Die Bezugszeichen gelten für alle Figuren.

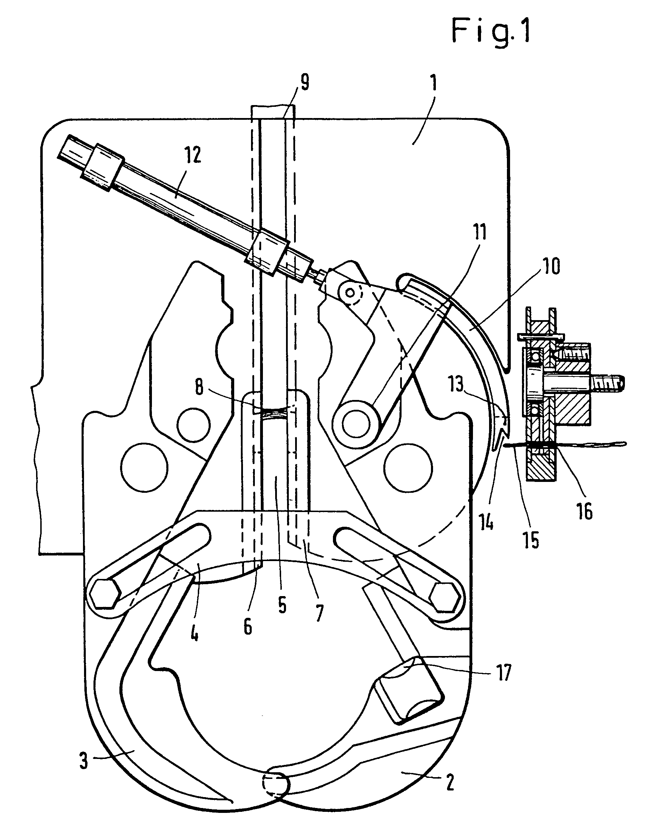

Die Fig. 1 zeigt die Ansicht eines Teiles eines Verschliesskopfes einer Verschliessmaschine vorzugsweise für grosskalibrige Würste, wobei an der Aufnahmeplatte 1 die Verdrängerscheren 2 und 3, der Vorraffer 4 angebracht sind.

In der Aufnahmeplatte 1 ist die Führungsbahn 5 mit zwei gegenüberliegenden Führungskanälen 6 und 7 eingearbeitet, in denen die Schenkel der Verschlussklammer 8 beim Vortrieb durch den Stempel 9 geführt werden. In der Aufnahmeplatte 1 oder dem nicht gezeigten Maschinengestell ist der gebogene Mitnehmer 10 bei 11 gelagert und wird durch einen Antrieb 12 vor- und zurückgeschwenkt. Das Endteil 13 des Mitnehmers 10 besitzt eine Aufnahme 14 für die Schlaufe 15. Der Mitnehmer 10 erfasst auf seinem Weg zur Führungsbahn 5 die Schlaufe 15, die auf einem Gurtband angebracht sein kann und durch eine Transporteinrichtung 16 in die Abgabestelle gebracht wird. In der Verdrängerschere 2 befindet sich die Matrize 17, die in Verbindung mit dem Stempel 9 für den Verschluss der Verschlussklammer 8 sorgt.

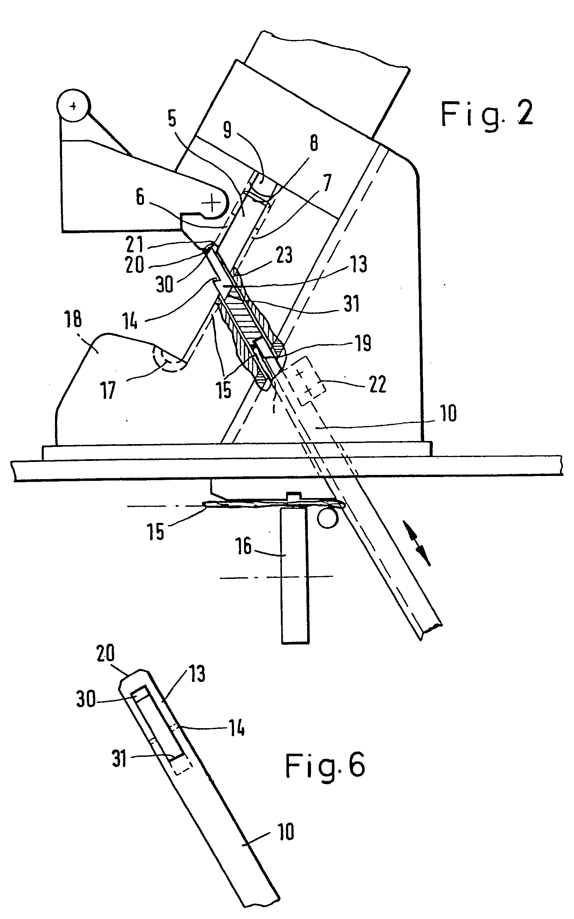

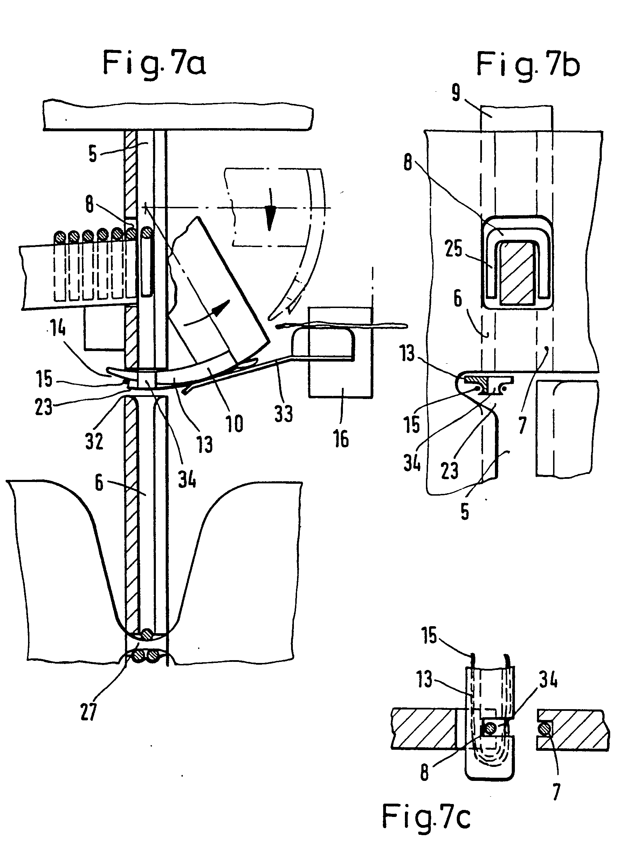

Die Fig. 2 zeigt ein weiteres Ausführungsbeispiel der Erfindung mit einem geraden Mitnehmer 10, zum Beispiel bei einem Tischverschliessgerät 18. Der Mitnehmer 10 besitzt eine zusätzliche Führung 19. Die Endbegrenzung des Mitnehmers 10 erfolgt hier mit seiner Stirnkante 20 bei 21, nachdem die Führungsbahn 5 bei 23 durchbrochen ist und einen Abschnitt der Führungsbahn 5 gebildet hat. Es kann aber auch an einer anderen Stelle des Mitnehmers 10, zum Beispiel ein Anschlag 22 (strichpunktiert gezeichnet) vorgesehen werden. 30, 31 sind die Flächen der Führungsbahn 5 des Mitnehmers 10 (vgl. Fig. 6).

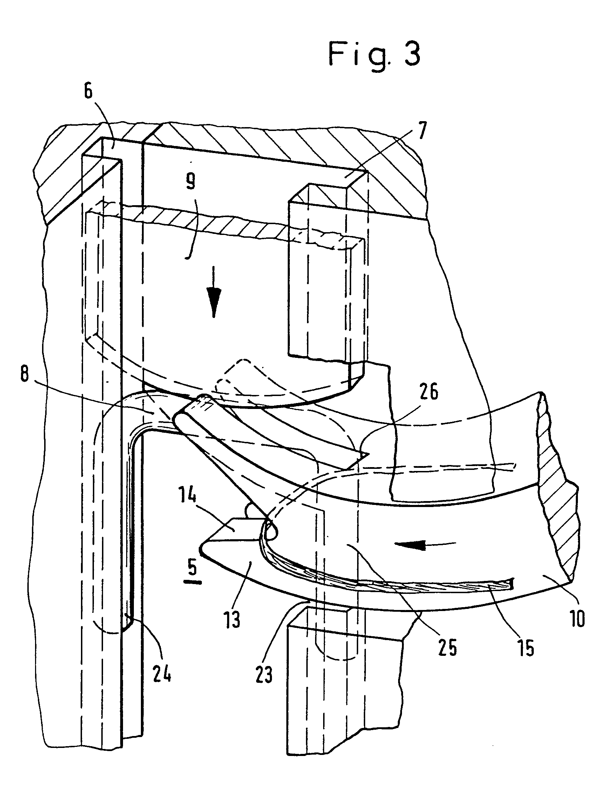

Die Fig. 3 zeigt in perspektivischer Darstellung den Durchbruch 23 der Führungsbahn 5 mit den Führungskanälen 6 und 7, in denen die Schenkel 24 und 25 der Verschlussklammer 8 gleiten. In der gezeigten Übergabestellung des Endteils 13 des Mitnehmers 10 liegt die Schlaufe 15 in der Aufnahme 14 des gabelförmig ausgebildeten Mitnehmerendes 13.

Der Grund 26 des gabelförmigen Endteils 13 bildet einen Abschnitt des Führungskanals 7, der bei 23 durchbrochen ist. Die Klammer 8 hat mit ihrem Schenkel 25 die Schlaufe 15 erfasst.

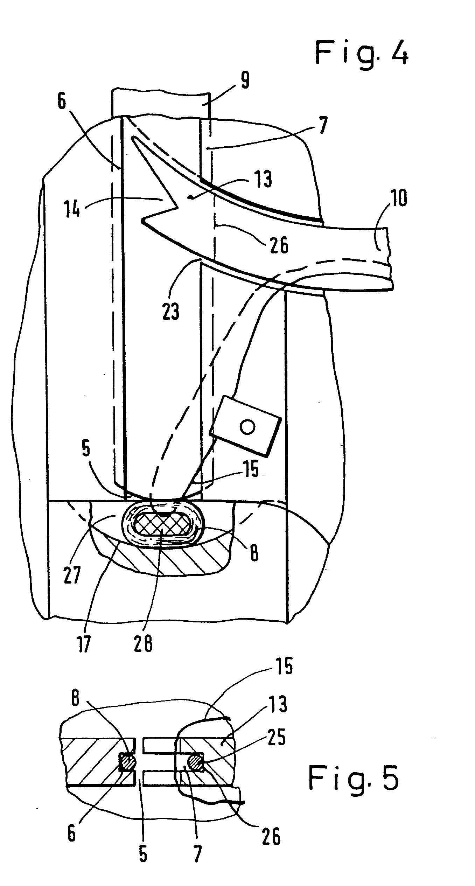

Die Fig. 4 zeigt das Endteil 13 des Mitnehmers 10 in seiner Übergabestellung wie es durch den Durchbruch 23 in die Führungsbahn 5 der Klammer 8 hineinragt. Der gabelförmige Grund 26 bildet einen Abschnitt des unterbrochenen Führungskanals 7. Die Schlaufe 15 wurde vom Schenkel 25 der Klammer 8 erfasst und von der Aufnahme 14 abgezogen, während der Stempel 9 die Klammer 8 zur Verschlussstelle 27 treibt. Die Klammer 8 wurde durch Stempel 9 und Matrize 17 ringförmig verschlossen. Sie hat sich dabei um den Zopf 28 der schlauchförmigen Verpackung gelegt und dabei die Schlaufe 15 mit eingeschlossen.

Die Fig. 5 zeigt einen Schnitt durch die unterbrochene Führungsbahn 5 und Endteil 13 des Mitnehmers 10 vor der Übernahme der Schlaufe 15 durch die Klammer 8. Die Schlaufe 15 liegt in der Aufnahme 14 des Endteils 13 des Mitnehmers 10.

Die Fig. 6 zeigt eine Draufsicht auf das Endteil 13 des Mitnehmers 10 der Fig. 2. Das Endteil 13 wurde hier geschlossen ausgeführt, so dass hier die Flächen 30 und 31 einen Abschnitt der Führungsbahn 5 bilden.

Die Fig. 7a und 7c zeigen eine andere Anordnung des Mitnehmers 10 an der Führungsbahn 5 einer Verschliessmaschine. Der Mitnehmer 10 tritt hier um 90° verdreht in die Führungsbahn 5. Bei dieser Ausführung kann das Endteil 13 des Mitnehmers 10 flach gehalten werden.

Die Fig. 7a zeigt einen Schnitt durch die Führungsbahn 5 und eine Ansicht auf den Führungskanal 6, der bei 32 durchbrochen ist. Die Schlaufenaufnahme 14 am Endteil 13 des Mitnehmers 10 holt sich die Schlaufe 15 bei Beginn seiner Bewegung aus dem Schlaufenzufuhrgerät 16. Eine Schlaufenführung 33 sorgt dafür, dass die Schlaufe 15 fest in der Schlaufenaufnahme 14 liegen bleibt, bis sie später von dem Klammerschenkel der Klammer 8 auf dem Weg zur Verschlussstelle 27 mitgenommen wird.

Die Fig. 7b zeigt den durchbrochenen Führungskanal 6 der Führungsbahn 5 und einen Schnitt durch das Endteil 13. Da der Durchbruch 23 durch den Führungskanal 6 nur einen kleinen Abschnitt bildet, braucht der Schenkel 25 der Klammer 8 nicht im Endteil 13 des Mitnehmers 10 geführt zu werden. Die Klammer 8 und der Stempel 9 treten auf ihrem Verschliessweg durch eine Aussparung 34 des Endteils 13 des Mitnehmers 10. Die Fig. 7c zeigt einen Schnitt der Fig. 7b mit einer Draufsicht auf das Endteil 13 des Mitnehmers 10. Die Aussparung 34 für den Durchtritt der Klammer 8 und des Stempels 9 ist hier etwas grösser gehalten und braucht nicht zur Klammerführung zu dienen.

**Patentansprüche**

1. Vorrichtung zur Zuführung und Übergabe von Wurstaufhängeschlaufen in die aus zwei gegenüberliegenden Führungskanälen (6, 7) gebildete Führungsbahn (5) von vereinzelt der Verschlussstelle einer Verschliessmaschine zugeführten Verschlussklammern (8), bestehend aus einem Mitnehmer (10) für die Schlaufe (15), dessen Endteil (13) in der Übergabestellung durch einen Durchbruch (23) mindestens eines Führungskanals (7) für einen Schenkel (25) der Verschlussklammer (8) in die Führungsbahn (5) hineinragt, dadurch gekennzeichnet, dass zur Zuführung einer Schlaufe (15) aus flexiblem Material in den Führungskanal (6, 7) und zur Erfassung nur einer Seite der geöffneten Schlaufe (15) durch einen Schenkel (25) der Verschlussklammer (8) das Endteil (13) des Mitnehmers (10) eine Aufnahme (14) enthält, die die eine Seite der geöffneten Schlaufe (15) mitnimmt, wobei das Endteil (13) des Mitnehmers (10) so ausgebildet ist, dass es die Führungsbahn (5) im Bereich der Übergabe der Schlaufe (15) freilässt und dass die Aufnahme (14) so positioniert wird, dass die eine Seite der Schlaufe (15) sich im Bereich der Führungsbahn (5) befindet.

2. Vorrichtung nach Anspruch 1, dadurch gekennzeichnet, dass das Endteil (13) des Mitnehmers (10) in der Übergabestellung einen Abschnitt des Führungskanals (6, 7) für mindestens einen Schenkel der Verschlussklammer (8) bildet.

3. Vorrichtung nach Anspruch 2, dadurch gekennzeichnet, dass das Endteil (13) des Mitnehmers (10) gabelförmig ausgebildet ist und in der Übergabestellung in die Führungsbahn (5) der Verschlussklammer (8) hineinragt, wobei der Grund (26) des gabelförmigen Endes einen Abschnitt des Führungskanals (6, 7) eines Schenkels der Verschlussklammer (8) bildet.

## Revendications

1. Dispositif pour amener et pour introduire des boucles de suspension de saucissons dans la voie de guidage (5) formée de deux canaux opposés de guidage (6, 7) d'agrafes de scellement (8) amenées séparément à l'endroit de scellement d'une machine de scellage, constitué d'un entraîneur (10) pour les boucles (15), dont la partie d'extrémité (13) fait, en la position d'introduction, saillie dans la voie de guidage (5) par un passage (23) ménagé dans au moins l'un des canaux de guidage (7) d'une branche (25) de l'agrafe de scellement (8), caractérisé en ce que, pour amener une boucle (15) en matériau souple dans le canal de guidage (6, 7) et pour ne saisir par une branche (25) de l'agrafe de scellement (8) qu'un côté de la boucle (5) ouverte, la partie d'extrémité (13) de l'entraîneur (10) comporte un logement (14) qui entraîne le côté de la boucle (15) ouverte, la partie d'extrémité (13) de l'entraîneur (10) étant constituée de manière à dégager la voie de guidage (5) dans la région de l'introduction de la boucle et le logement (14) a une position telle que le côté de la boucle (15) se trove dans la région de la voie de guidage (5).

2. Dispositif suivant la revendication 1, caractérisé en ce que la partie d'extrémité (13) de l'entraîneur (10) forme, en la position d'introduction, un tronçon du canal de guidage (6, 7) d'au moins une branche de l'agrafe de scellement (8).

3. Dispositif suivant la revendication 2, caractérisé en ce que la partie d'extrémité (13) de l'entraîneur (10) est en forme de fourche et, dans la position d'introduction, fait saillie dans la voie de guidage (5) de l'agrafe de scellement (8), le fond (26) de l'extrémité en forme de fourche formant un tronçon du canal de guidage (6, 7) d'une branche de l'agrafe de scellage (8).

## Claims

1. Apparatus for feeding and delivering sausage hanger loops into a guideway (5) for closing clips (8) which are individually fed to the closing station of a closing machine, which guideway consists of two mutually opposite guide passages (6, 7), consisting of a pusher (10) for the loop (15), the end portion (13) of which pusher in the delivery position protrudes into the guideway (5) through an aperture (23) in at least one guide passage (7) for one leg (25) of the closing clip (8), characterized in that for feeding a loop (15) of flexible material into the guide passage (6, 7) and for engaging only one side of the opened loop (15) with one leg (25) of the closing clip (8) the end portion (13) of the pusher (10) contains a receptacle (14), which carries one side of the opened loop (15) along, the end portion (13) of the pusher (10) is so designed that it leaves free the guideway (5) in the region in which the loop (15) is delivered, and the receptacle (14) is so positioned that the one side of the loop (15) is disposed adjacent to the guideway (5).

2. Apparatus according to claim 1, characterized in that the end portion (13) of the pusher (10) in the delivery position constitutes a portion of the guide passage (6, 7) for at least one leg of the closing clip (8).

3. Apparatus according to claim 2, characterized in that the end portion (13) of the pusher (10) is forked and in the delivery position protrudes into the guideway (5) for the closing clip (8) and the bight (26) of the forked end constitutes a portion of the guide passage (6, 7) for one leg of the closing clip (8).

# Fig.1

Fig. 2

Fig. 6

# Fig. 3

Fig. 4

Fig. 5

# Fig.7a

# Fig.7b

5

8

14

15
23

32

13

10

33

16

6

34

27

9

8

25

6

13

15

34

23

7

5

7

15

13

34

8

7

# Fig.7c